(19) Europäisches Patentamt
European Patent Office
Office européen des brevets

(11) **EP 2 020 627 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(51) Int Cl.:
***G05D 11/13*** *(2006.01)*

(21) Anmeldenummer: 07014872.1

(22) Anmeldetag: **30.07.2007**

(54) **Verfahren und Vorrichtung zum Herstellen einer Mischung**

Method and device for manufacturing a mixture

Procédé et dispositif destinés à la fabrication d'un mélange

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**04.02.2009 Patentblatt 2009/06**

(73) Patentinhaber: **Esca Food Solutions GmbH & Co.KG**
**47228 Duisburg (DE)**

(72) Erfinder: **Buchner, Siegfried**
**89312 Günzburg (DE)**

(74) Vertreter: **Philipp, Matthias**
**Forrester & Boehmert**
**Pettenkoferstrasse 20-22**
**80336 München (DE)**

(56) Entgegenhaltungen:
**GB-A- 2 115 303       GB-A- 2 120 563**
**US-A1- 2005 223 633**

**Beschreibung**

Die Erfindung betrifft ein Verfahren und eine Vorrichtung zum Herstellen einer Mischung aus einem pulverförmigen Material und einem Lösungsmittel.

Bei zahlreichen pulverförmigen Materialien, die durch Vermischung mit einem Lösungsmittel zu einer Mischung, bspw. einer Suspension, verarbeitet werden sollen, sind im Laufe der Zeit bzw. von Charge zu Charge Schwankungen in den Rohstoffeigenschaften zu beobachten, die bspw. darauf zurückzuführen sind, daß es sich bei dem Material ganz oder teilweise um natürliche Rohstoffe handelt, deren Zusammensetzung und Eigenschaften nicht exakt konstant sind.

Es ist daher nicht möglich, für die Herstellung einer gewünschten Mischung mit festgelegten Eigenschaften, bspw. einer festgelegten Viskosität, ein einmal erprobtes Mischungsverhältnis zwischen Feststoff und Lösungsmittel auf die jeweils benötigten Mengenverhältnisse anzuwenden, sondern es muß in den meisten Fällen während des Mischungsvorgangs entweder Feststoff oder Lösungsmittel zusätzlich zugegeben werden, um die gewünschten Zielwerte wie etwa Viskosität einzuhalten. Ein derartiges Eingreifen in einen laufenden Mischungsprozeß ist aus verschiedenen Gründen nachteilig.

Dokument GB 2 120 563 offenbart z.B. ein Verfahren zum Herstellen einer Mischung wobei zur Kalibrierung der Mischungsanlage eine Probemischung ausgeführt wird.

Die Aufgabe der Erfindung besteht darin, ein Verfahren und eine Vorrichtung zum Herstellen einer Mischung aus einem pulverförmigen Material und einem Lösungsmittel anzugeben, mit dem bzw. der der vorgenannte Nachteil des Stands der Technik vermieden wird und die Möglichkeit geschaffen wird, eine Mischung mit gewünschten Eigenschaften praktisch ohne Eingriffe in einen laufenden Mischungsprozeß oder nachträgliche Korrekturmaßnahmen herzustellen.

Diese Aufgabe wird in verfahrensmäßiger Hinsicht durch ein Verfahren zum Herstellen einer Mischung aus einem pulverförmigen Material und einem Lösungsmittel, etwa Wasser, gelöst, mit den Schritten: Vorgeben eines Zielwertes einer ausgewählten physikalischen Eigenschaft der Mischung, Bereitstellen einer anfänglichen mathematischen Korrelationsfunktion zwischen der ausgewählten physikalischen Eigenschaft und einem Mischungsverhältnis zwischen Lösungsmittel und pulverförmigem Material, Herstellen einer chargenspezifischen Probemischung in einem vorgegebenen Mischungsverhältnis unter standardisierten Bedingungen, Bestimmen eines Wertes der ausgewählten physikalischen Eigenschaft der Probemischung, Bestimmen einer angepaßten Korrelationsfunktion aus der anfänglichen Korrelationsfunktion und dem Wert der physikalischen Eigenschaft bei dem vorgegebenen Mischungsverhältnis, Ermitteln mit der angepaßten Korrelationsfunktion eines Ziel-Mischungsverhältnisses für eine Mischung, deren ausgewählte physikalische Eigenschaft dem Zielwert entspricht, und Herstellen der Mischung mit dem ermittelten Ziel-Mischungsverhältnis.

Ziel der Anpassung der anfänglichen Korrelationsfunktion ist es, diese so zu erweitern, daß der gemessene Wert der physikalischen Eigenschaft von der angepaßten Korrelationsfunktion umfaßt ist und von dieser wiedergegeben wird. Anders gesagt werden die Werte an der Messung der Probe in die anfängliche Korrelationsfunktion eingefügt, um eine Erhöhung der Genauigkeit der Korrelationsfunktion zu erreichen.

Das entsprechend der gewünschten Eigenschaft vorgegebene Mischungsverhältnis kann anhand der anfänglichen Korrelationsfunktion bestimmt werden.

Es kann vorgesehen sein, daß die ausgewählte physikalische Eigenschaft die Viskosität, die elektrische Leitfähigkeit, der Trockenmassegehalt, die Löslichkeit oder der Fettgehalt ist.

Bevorzugt ist vorgesehen, daß als anfängliche Korrelationsfunktion eine angepaßte Korrelationsfunktion aus einem früheren Mischungsvorgang verwendet wird. Dadurch erhält das Verfahren eine selbstlernende Komponente.

Zweckmäßigerweise sieht die Erfindung vor, daß für die Herstellung der Probemischung eine erste automatische Mischeinrichtung verwendet wird.

Entsprechend ist zweckmäßigerweise vorgesehen, daß für die Herstellung der Mischung eine zweite automatisierte Mischeinrichtung verwendet wird. Bevorzugt ist vorgesehen, daß die erste und zweite automatische Mischeinrichtung von einer gemeinsamen oder von miteinander verbundenen Steuereinrichtung(en) gesteuert werden.

Weiterhin kann vorgesehen sein, daß ein Wert der ausgewählten physikalischen Eigenschaft der Mischung bestimmt wird. Es kann dann ggf. eine Korrekturmenge an pulverförmigem Material oder Lösungsmittel zugegeben werden, die anhand der angepaßten Korrelationsfunktion bestimmt werden kann.

Ferner beschrieben wird eine Vorrichtung zum Herstellen einer Mischung aus einem pulverförmigen Material und einem Lösungsmittel, etwa Wasser, mit einer ersten Mischeinrichtung zum Herstellen einer Probemischung aus dem pulverförmigen Material und dem Lösungsmittel in einem vorgegebenen Mischungsverhältnis, einer Bestimmungseinrichtung zum Bestimmen eines Wertes einer ausgewählten physikalischen Eigenschaft der Probemischung, einer zweiten Mischeinrichtung mit einer Steuerung, in der eine anfängliche mathematische Korrelationsfunktion zwischen der ausgewählten physikalischen Eigenschaft und einem Mischungsverhältnis zwischen Lösungsmittel und pulverförmigem Material gespeichert und eine angepaßte Korrelationsfunktion speicherbar ist, einem Mittel zum Bestimmen einer angepaßten Korrelationsfunktion aus der anfänglichen Korrelationsfunktion und dem bestimmten Wert der ausgewählten physikalischen Eigenschaft und zum Speichern der angepaßten Korrelationsfunktion.

Die Bestimmungseinrichtung kann eine Viskositätsmeßeinrichtung sein.

Die Steuerung kann einen Mikroprozessor mit einer Speichereinheit zum Speichern von Korrelationsfunktionen, Mischungsverhältnissen und Werten aufweisen.

Das Mittel zum Bestimmen einer angepaßten Korrelationsfunktion kann ein Mikroprozessor sein.

Die Erfindung beruht auf der Nutzung des Zusammenhangs eines Mischungsverhältnisses, bspw. eines Lösungsmittels wie Wasser und einer pulverförmigen Komponente, mit einer ausgewählten physikalischen Eigenschaft der Mischung, insbesondere deren Viskosität. Die Nutzung der Korrelation von Mischungsverhältnis und Viskosität bspw. bei Suspensionen und Feststoff-Lösungsmittel-Gemischen ist an sich bekannt und wird in vielen Bereichen zur Prozeßsteuerung und zum Einstellen von Produktparametern eingesetzt. Die Erfindung setzt hier an und sieht eine vorherige Bestimmung chargenspezifischer Eigenschaften in mittelbarer Weise durch Herstellen einer Probemischung und Bestimmen eines Werts der ausgewählten physikalischen Eigenschaft vor. Dadurch besteht die Möglichkeit, im Endprodukt Rohstoffschwankungen durch automatisches Anpassen der Rezepturwerte ohne oder mit geringeren Eingriffen in den Mischungsprozeß.

Wesentlich ist die Kombination aus Untersuchung der Komponenten und Festlegen des richtigen Mischungsverhältnisses mit Hilfe der erhaltenen Werte. Bevorzugt ist die der Berechnung zugrundeliegende Formel (Korrelationsfunktion) eine selbstlernende mathematische Funktion, in die die aktuell eingegebenen Werte automatisch eingefügt werden. Durch die ständige Aktualisierung der Korrelationsformel mittels Übernahme von Meßwerten des Rohrmaterials wird die Genauigkeit des Systems erhöht und der Prozeß automatisch an langfristige Rohstoffveränderungen angepaßt, bspw. saisonale Veränderungen bei Naturprodukten oder Veränderungen bei Rezepturbestandteilen von Mischungen. Eine beispielhafte Korrelationsfunktion lautet etwa:

$$\eta = f\left(m_s + m_l + m_x\right)\ldots$$

Wobei:

$\eta$ = Viskosität
$m_s$ = Masse Pulver
$m_l$ = Masse Lösungsmittel
$m_x$ = Masse einer beliebigen Substanz

Bei der "beliebigen Substanz" kann es sich um eine Flüssigkeit (kein Lösungsmittel), einen pastösen Stoff oder einen Feststoff beliebiger Konsistenz handeln, deren Zugabemenge $m_x$ von den speziellen Gegebenheiten und Anforderungen eines bestimmten Mischvorgangs abhängt.

Die Messung der Eigenschaften des pulverförmigen Materials erfolgt zeitlich und räumlich getrennt von der eigentlichen Produktionsanlage, wobei die Zuordnung der Werte zu den einzelnen Rohrstoffen über eine nachvollziehbare Kennzeichnung jederzeit möglich ist, bspw. durch Erfassung eines Barcodes einer angelieferten Rohrstoffmenge.

Die Erfindung wird nachfolgend anhand eines Ausführungsbeispiels erläutert, wobei auf eine Zeichnung Bezug genommen ist, in der

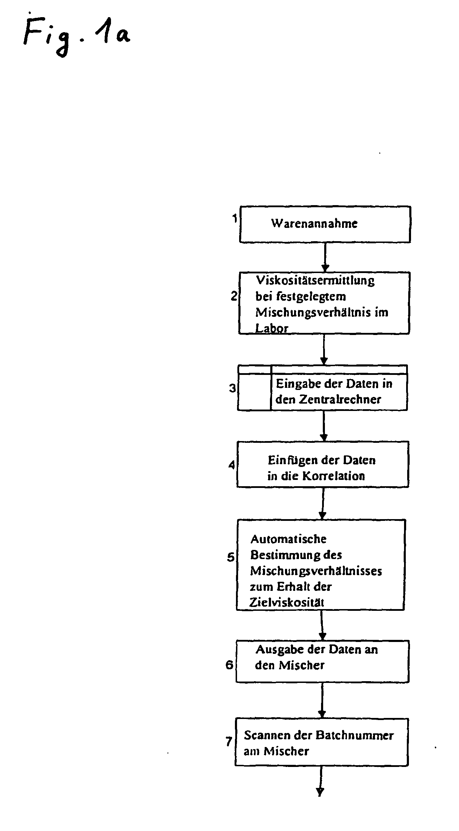

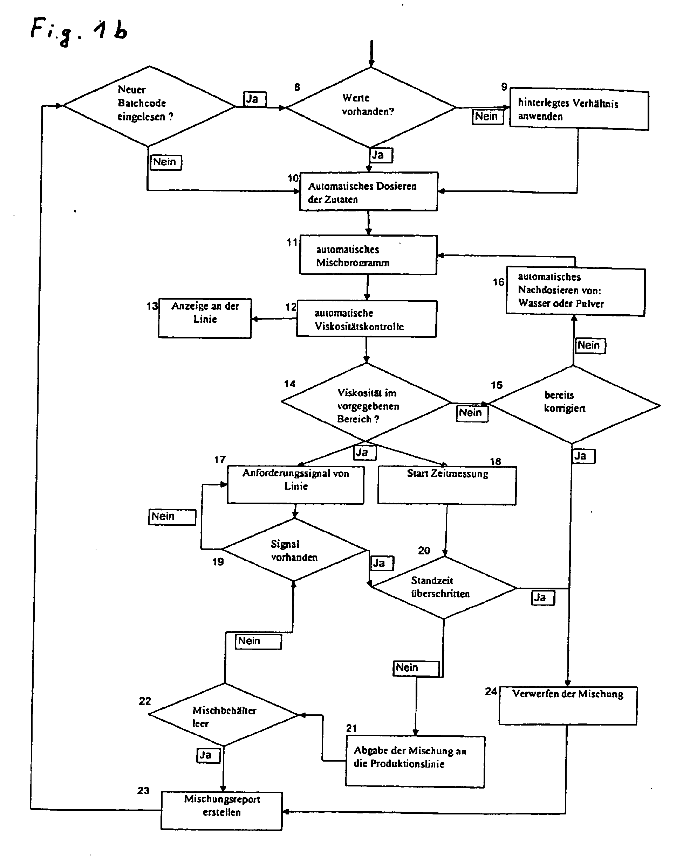

Fig. 1a, 1b ein Ablaufdiagramm des erfindungsgemäßen Verfahrens zeigen.

Nachfolgend wird ein Ausführungsbeispiel eines Verfahrens zum Herstellen einer Mischung aus einem pulverförmigen Material und einem Lösungsmittel nach der Erfindung erläutert. Das pulverförmige Material wird als Rohware angeliefert (1). Aus einer relativ kleinen Menge, bspw. 0,5 kg pulverförmigem Material und 0,5 kg Lösungsmittel, hier Wasser, wird eine Probemischung mit einem vorab festgelegten Mischungsverhältnis von 1:1 hergestellt (2). Hierbei wird bevorzugt eine automatisierte Mischeinrichtung mit einer Steuerung verwendet, in der das Mischungsverhältnis einprogrammiert ist und die die Mischungsbestandteile, pulverförmiges Material und Wasser, bei standardisierten Bedingungen automatisch mischt.

Die standardisierten Bedingungen bedeuten in diesem Beispiel eine festgelegte Temperatur, etwa 10°C oder 20°C, Mischzeit etwa 60 sec., Mischergeschwindigkeit und Meßeinrichtung. Es wird ein Zielwert einer ausgewählten physikalischen Eigenschaft der Probemischung vorgegeben und bestimmt, hierbei ein bestimmter Zielwert der Viskosität der Mischung, etwa 1000 Pa·s.

Durch Vorgabe eines bestimmten Mischungsverhältnisses und der standardisierten Bedingungen wird sichergestellt, daß allein die veränderlichen Eigenschaften des pulverförmigen Materials Einfluß auf die Viskosität der Mischung haben und darstellbar sind. Die Untersuchung zur Viskosität wird jeweils in Doppelbestimmung durchgeführt.

Alternativ kann eine andere physikalische Eigenschaft der Probemischung vorgegeben werden, bspw. die elektrische Leitfähigkeit, der Trockenmassegehalt, die Löslichkeit oder der Fettgehalt, wobei in jedem Falle ein Zielwert dieser Eigenschaft vorgegeben wird, der bei der eigentlich herzustellenden Mischung einzuhalten ist.

Zur Bestimmung des vorgegebenen Mischungsverhältnisses als Funktion des Zielwerts der ausgewählten physikalischen Eigenschaft der Mischung wird eine mathematische Korrelationsfunktion verwendet, die vorab bestimmt worden ist und den Zusammenhang zwischen den Werten der ausgewählten physikalischen Eigenschaft und dem Mischungsverhältnis zwischen dem pulverförmigen Material und dem Lösungsmittel angibt. Bei einem pulverförmigen Material, welches keinerlei Eigenschaftsschwankungen unterworfen ist, wäre die mathematische Korrelationsfunktion unveränderlich, und ein vorgegebenes Mischungsverhältnis würde stets zu den gleichen Werten der ausgewählten physikalischen Eigenschaft führen. Da allerdings in der Realität zahlreiche zu verwendende pulverförmigen Materialien schon bspw. aufgrund ihrer Naturstoffanteile Eigenschaftsschwankungen aufweisen, ist auch die verwendete Korrelationsfunktion meist nur eine Näherung, so daß ein anhand dieser Funktion bestimmtes Mischungsverhältnis nicht zwangsläufig zu dem angestrebten Zielwert der ausgewählten physikalischen Eigenschaft in der Probemischung führt. Es ist aber stets von einer gewissen Ähnlichkeit der unterschiedlichen Korrelationsfunktionen bei nicht zu starken Eigenschaftsschwankungen auszugehen, die den Ansatz gemäß der Erfindung ermöglicht.

Es werden daher die erhaltenen Viskositätswerte über eine Eingabemaske via PC-Netzwerk einem zentralen Rechner mitgeteilt (3), wobei eine eindeutige Zuordnung der Daten über den EAN-Code erreicht wird. Die ermittelten Werte werden nun verwendet, um zunächst eine aktualisierte oder angepaßte oder aktualisierte Korrelationsfunktion aus der anfänglichen Korrelationsfunktion und dem durch Messung bestimmten Wert der ausgewählten physikalischen Eigenschaft in der Probemischung zu bestimmen. Anders ausgedrückt, wird die vorhandene, anfängliche Korrelationsfunktion an die tatsächlichen Eigenschaften des pulverförmigen Materials, mit dem die Probemischung hergestellt worden ist, angepaßt und dadurch um die neu bestimmten Meßwerte erweitert, um so die Möglichkeit zu schaffen, mittels der angepaßten oder aktualisierten Korrelationsfunktion ein Mischungsverhältnis zu bestimmen, mit dem der angestrebte Zielwert erreicht werden kann (4).

Nurmehr wird mit Hilfe der angepaßten Korrelationsfunktion ein Ziel-Mischungsverhältnis für eine herzustellende Mischung ermittelt, deren ausgewählte physikalische Eigenschaft einen Wert hat, der dem anfangs vorgegebenen Zielwert der Mischung entspricht (5).

Das errechnete, benötigte Mischungsverhältnis wird unter der Batch-Nummer des laufenden Mischungsvorgangs im System hinterlegt (6).

Beim Einbringen der Palette, auf der sich das zu verarbeitende pulverförmige Material befindet, in den Vorratsbehälter des Mischers wird die Batch-Nummer gescannt (7), und es wird vom System geprüft, ob für diese Batch-Nummer Zielwerte für die ausgewählte physikalische Eigenschaft im System hinterlegt sind (8).

Ist dies ausnahmsweise einmal nicht der Fall, wird automatisch auf ein vorab hinterlegtes Mischungsverhältnis zurückgegriffen (9), welches bspw. anhand der anfänglichen Korrelationsfunktion ermittelt wird.

Im Normalfall sind allerdings Werte auf der Grundlage der Probemischung vorhanden, und es erfolgt eine automatische Dosierung es pulverförmigen Materials und des Lösungsmittels (hier Wasser) in den Mischbehälter, gesteuert über Wiegezellen und Durchflußmesser, wobei die Gesamtmenge der fertigen Mischung beliebig einstellbar ist (10).

Für die Herstellung der Mischung wird bevorzugt ein automatischer Mischer verwendet, der von einer Steuerung gesteuert wird, in der ein Mischprogramm sowie die anfängliche und angepaßte Korrelationsfunktion gespeichert sind. Zweckmäßigerweise steht die Steuerung des Mischers mit der Steuerung der für die Herstellung der Probemischung verwendeten Mischeinrichtung in Verbindung, oder es handelt sich um ein und dieselbe Steuerung. Zweckmäßigerweise weist die Steuerung einen Mikrocomputer auf, der alle erforderlichen Auswertungen und Berechnungen vornimmt.

Nach Ablauf des hinterlegen Mischprogramms (11) erfolgt eine automatische Viskositätskontrolle (12) bzw. eine Bestimmung eines Wertes einer anderen ausgewählten physikalischen Eigenschaft der Mischung.

Der ermittelte Wert wird über eine Anzeige an der Linie optisch dargestellt, wobei bei Über- oder Unterschreitung eines jeweiligen Grenzwerts eine Alarmmeldung erfolgt (13).

Im Falle einer Grenzwertüberschreitung wird geprüft, ob bei dieser Mischung bereits eine Korrektur durchgeführt worden ist (15). Wenn ja, wird die Mischung verworfen (24), wenn nicht, wird eine automatische Korrektur gestartet (16), sofern notwendig, bei der eine hinterlegte Korrekturmenge an Lösungsmittel (Wasser) oder pulverförmigem Material zu der vorhandenen Mischung zugegeben wird. Alternativ kann die angepaßte Korrelationsfunktion zur Bestimmung der Korrekturmenge verwendet werden. Anschließend wird ein Nachmischvorgang gestartet, nach dessen Beendigung erneut eine Viskositätsmessung durchgeführt wird.

Liegt die Viskosität im vorgegebenen Bereich, wird ein Zeitnehmer gestartet (18), der die einstellbare Standzeit der Mischung im Mischbehälter überwacht und bei Überschreitung eine Warnmeldung ausgibt. Dies erfolgt aus dem Grunde, da die Viskosität der Mischung sich bedingt durch die Rohstoffkomponenten über die Zeit verändert. Das Zeitfenster, in dem die Mischung die geforderten Eigenschaften besitzt, muß daher festgelegt und kontrolliert werden. Gleichzeitig wartet die Anlage auf ein Anforderungssignal von einer Produktionslinie (17), wo über einen Füllstandsmelder der Flüssigkeitsstand in der Applikationseinrichtung gemessen wird.

Bei positivem Signal von der Linie (19) wird eine Abfrage nach der Standzeit gestartet (20). Liegt die Standzeit im vorgegebenen Bereich, wird eine entsprechende Menge der Mischung an die Linie abgegeben (21). Ist die Standzeit überschritten, wird die Mischung verworfen (24) und ein Mischungsreport erstellt (23).

Bei Erlöschen des Anforderungssignals von der Produktionslinie schließt ein Ablaßventil, und die Anlage geht in Wartestellung, während die Standzeitmessung (20) weiterläuft.

Meldet der Füllstandsmelder im Mischer eine vollständige Entleerung (22), wird automatisch ein Mischungsreport erstellt, in dem alle produktionsspezifischen Parameter erfaßt sind (23), nämlich die Viskosität der Mischung nach erster Mischung, ggf. nach erfolgter Nachmischung und bei Abgabe an die Linie, wobei die Ausgabe der Viskosität bspw. in mPas erfolgt; Temperaturen der Mischung (Anfangs- und Endtemperatur); Batch-Nummer des pulverförmigen Materials; Mischungsverhältnisse (Wasser- und Materialmengen); verwendetes Programm; Uhrzeit; Datum; automatischer oder manueller Modus; Rührgeschwindigkeiten; Umdrehungen und Zeiten; Zeitpunkte für Start der Mischung und Abgabe an die Linie (auch intervallweise); Überschreitung der Standzeit, wobei über Störungen eine vollständige Historie erstellt wird und die erforderlichen Nachmischvorgänge aufgezeichnet werden, ebenso wie die zur Korrektur nötigen Mengen an Lösungsmittel und pulverförmigem Material. Ferner werden Änderungen an den Einstellungen gespeichert (Art der Änderung, Datum, Zeitpunkt, Benutzer), und es erfolgt eine Speicherung und Ausgabe von Störungsmeldungen und Warnmeldungen (Ort, Datum, Zeit, Dauer).

Die Anlage erstellt eine neue Mischung (10), wenn in der Zwischenzeit ein neuer Batch-Code eingescannt wurde (7), und es wird automatisch die Abfrage nach hinterlegten Werten gestartet (8).

## Patentansprüche

1. Verfahren zum Herstellen einer Mischung aus einem pulverförmigen Material und einem Lösungsmittel, **gekennzeichnet durch** die Schritte:

   - Vorgeben eines Zielwertes einer ausgewählten physikalischen Eigenschaft der Mischung,
   - Bereitstellen einer anfänglichen mathematischen Korrelationsfunktion zwischen der ausgewählten physikalischen Eigenschaft und einem Mischungsverhältnis zwischen Lösungsmittel und pulverfömigem Material,
   - Herstellen einer Probemischung in einem vorgegebenen Mischungsverhältnis unter standardisierten Bedingungen,
   - Bestimmen eines Wertes der ausgewählten physikalischen Eigenschaft der Probemischung,
   - Bestimmen einer angepaßten Korrelationsfunktion aus der anfänglichen Korrelationsfunktion und dem Wert der physikalischen Eigenschaft bei dem vorgegebenen Mischungsverhältnis,
   - Ermitteln mit der angepaßten Korrelationsfunktion eines Ziel-Mischungsverhältnisses für eine Mischung, deren ausgewählte physikalische Eigenschaft dem Zielwert entspricht, und
   - Herstellen der Mischung mit dem ermittelten Ziel-Mischungsverhältnis.

2. Verfahren nach Anspruch 1, **dadurch gekennzeichnet, daß** die ausgewählte physikalische Eigenschaft die Viskosität, die elektrische Leitfähigkeit, der Trockenmassegehalt, die Löslichkeit oder der Fettgehalt ist.

3. Verfahren nach Anspruch 1 oder 2, **dadurch gekennzeichnet, daß** als anfängliche Korrelationsfunktion eine angepaßte Korrelationsfunktion aus einem früheren Mischungsvorgang verwendet wird.

4. Verfahren nach einem der vorangehenden Ansprüche, **dadurch gekennzeichnet, daß** für die Herstellung der Probemischung eine erste automatische Mischeinrichtung verwendet wird.

5. Verfahren nach einem der vorangehenden Ansprüche, **dadurch gekennzeichnet, daß** für die Herstellung der Mischung eine zweite automatisierte Mischeinrichtung verwendet wird.

6. Verfahren nach Anspruch 5, **dadurch gekennzeichnet, daß** die erste und zweite automatische Mischeinrichtung von einer gemeinsamen oder von miteinander verbundenen Steuereinrichtung(en) gesteuert werden.

7. Verfahren nach einem der vorangehenden Ansprüche, **dadurch gekennzeichnet, daß** ein Wert der ausgewählten physikalischen Eigenschaft der Mischung bestimmt wird.

8. Verfahren nach Anspruch 7, **dadurch gekennzeichnet, daß** eine Korrekturmenge an pulverförmigem Material oder Lösungsmittel zugegeben wird, die anhand der angepaßten Korrelationsfunktion bestimmt werden kann.

## Claims

1. Method for manufacturing a mixture from a powdery material and a solvent, **characterised by** the steps:

   - Setting a target value of a selected physical property of the mixture,
   - Preparing an initial mathematical correlation function between the selected physical property and a mix ratio between solvent and powdery material,
   - Manufacturing a test mixture in a predetermined mix ratio under standardised conditions,
   - Determining a value of the selected physical property of the test mixture,
   - Determining an adapted correlation function from the initial correlation function and the value of the physical property in the predetermined mix ratio,
   - Using the adapted correlation function to calculate a target mix ratio for a mixture whose selected physical property corresponds to the target value, and
- Manufacturing the mixture with the calculated target mix ratio.

2. Method according to claim 1, **characterised in that** the selected physical property is viscosity, electrical conductivity, dry mass content, solubility or fat content.

3. Method according to claim 1 or 2, **characterised in that** an adapted correlation function from an earlier mixing process is used as initial correlation function.

4. Method according to one of the preceding claims, **characterised in that** a first automatic mixing device is used to manufacture the test mixture.

5. Method according to one of the preceding claims, **characterised in that** a second automatic mixing device is used to manufacture the test mixture.

6. Method according to claim 5, **characterised in that** the first and second automatic mixing devices are controlled by a common or by interconnected control device(s).

7. Method according to one of the preceding claims, **characterised in that** a value of the selected physical property of the mixture is determined.

8. Method according to claim 7, **characterised in that** a correction quantity of powdery material or solvent, which can be determined on the basis of the adapted correlation function, is added.


## Revendications

1. Procédé de fabrication d'un mélange d'un matériau pulvérulent et d'un solvant, **caractérisé par** les étapes consistant à :

   - affecter une valeur de consigne d'une propriété physique sélectionnée du mélange,
   - fournir une fonction de corrélation mathématique initiale, entre la propriété physique sélectionnée et un rapport de mélange entre solvant et matériau pulvérulent,
   - produire un mélange échantillon, dans un rapport de mélange prédéterminé dans des conditions standardisées,
   - déterminer une valeur de la propriété physique sélectionnée du mélange échantillon,
   - déterminer une fonction de corrélation adaptée à partir de la fonction de corrélation initiale et de la valeur de la propriété physique, pour le rapport de mélange prédéterminé,
   - avec la fonction de corrélation adaptée, déterminer un rapport de mélange de consigne, pour un mélange dont la propriété physique sélectionnée correspond à la valeur de consigne, et
   - fabriquer le mélange avec le rapport de mélange de consigne ayant été déterminé.

2. Procédé selon la revendication 1, **caractérisé en ce que** la propriété physique sélectionnée est la viscosité, la conductivité électrique, la teneur en masse sèche, la solubilité ou la teneur en graisse.

3. Procédé selon la revendication 1 ou 2, **caractérisé en ce que** l'on utilise comme fonction de corrélation initiale une fonction de corrélation adaptée issue d'un processus de mélange antérieur.

4. Procédé selon l'une des revendications précédentes, **caractérisé en ce qu'**on utilise un premier dispositif de mélange automatique pour la fabrication du mélange échantillon.

5. Procédé selon l'une des revendications précédentes, **caractérisé en ce qu'**on utilise un deuxième dispositif de mélange automatique pour la fabrication du mélange.

6. Procédé selon la revendication 5, **caractérisé en ce que** le premier et le deuxième dispositif de mélange automatique est commandé par un dispositif de commande commun, ou par des dispositifs de commande reliés entre eux.

7. Procédé selon l'une des revendications précédentes, **caractérisé en ce qu'**une valeur de la propriété physique sélectionnée du mélange est déterminée.

8. Procédé selon la revendication 7, **caractérisé en ce qu'**on ajoute une quantité correctrice de matériau pulvérulent ou de solvant, pouvant être déterminée à l'aide de la fonction de corrélation adaptée.

Fig. 1a

**Fig. 1b**

**EP 2 020 627 B1**

**In der Beschreibung aufgeführte Patentdokumente**

- GB 2120563 A